# EUROPÄISCHE PATENTSCHRIFT

(11) **EP 2 955 312 B1**
(45) Veröffentlichungstag und Bekanntmachung des Hinweises auf die Patenterteilung: **07.11.2018**
(21) Anmeldenummer: 15171703.0
(22) Anmeldetag: 11.06.2015
(51) Int. Cl.: E06B 3/677, E06B 5/16, B32B 17/06

(54) **VERFAHREN ZUR HERSTELLUNG EINER BRANDSCHUTZSCHEIBE**
METHOD FOR MANUFACTURING A FIRE PROTECTION PANE
PROCEDE DE FABRICATION D'UNE VITRE DE PROTECTION CONTRE L'INCENDIE

(30) Priorität: 13.06.2014 DE 102014108372
(43) Veröffentlichungstag der Anmeldung: 16.12.2015
(60) Teilanmeldung: 18177262.5
(73) Patentinhaber: Etex Building Performance GmbH, 40878 Ratingen (DE)
(72) Erfinder: Bermes, Burkhard, 40878 Ratingen (DE)
(74) Vertreter: Vaeck, Elke

(56) Entgegenhaltungen:
- DE-A1- 4 102 696
- DE-A1- 19 543 148
- DE-A1-102005 018 842
- US-A- 4 268 581

## Beschreibung

Die vorliegende Erfindung betrifft ein Verfahren zur Herstellung einer Brandschutzscheibe, insbesondere für eine Brandschutzverglasung zur Vermeidung des Durchtritts von Feuer und/oder Rauch im Brandfall von einem Raum in einen anderen Raum, mit wenigstens zwei voneinander beabstandeten und einen Zwischenraum definierenden Glasscheiben, wobei der Zwischenraum mit einem Brandschutzmedium gefüllt ist.

Brandschutzscheiben sind lichtdurchlässige Bauteile, die dazu bestimmt sind, entsprechend ihrer Feuerwiderstandsdauer nicht nur die Ausbreitung von Feuer und/oder Rauch, sondern bei Bedarf oder auf Wunsch zusätzlich auch einen unzulässigen Übergang von Wärme zu verhindern. Dazu werden Brandschutzscheiben verwendet, welche mehrlagig aus Glasscheiben mit einem dazwischen angeordneten Brandschutzmedium aufgebaut sind. Im Brandfall wird das Brandschutzmedium aktiviert, so dass die Wärmestrahlung absorbiert und eine hochwirksame Dämmschicht gebildet wird.

Als Brandschutzmedium finden im Wesentlichen feste, im Brandfall vorzugsweise aufschäumende bzw. anderweitig volumenvergrößernde oder kühlende Materialien Verwendung. Im Brandfall tritt das aufschäumende bzw. anderweitig volumenvergrößernde Brandschutzmedium dabei aus den Stoßflächen einer Brandschutzscheibe aus und verschließt eine jeweils zur angrenzenden Brandschutzscheibe, Wand oder Decke und/oder Rahmenkonstruktion belassene Fuge, so dass Flammen, Rauch und/oder Wärme nicht mehr hindurchtreten können. Alternativ kann das Brandschutzmedium kühlend wirken, ohne ein nennenswertes Aufschäumen zu zeigen. Als Brandschutzmedium werden insbesondere wasserglashaltige Medien oder gelförmige Medien wie beispielsweise ein salzhaltiges Hydrogel mit elektrolytischen Eigenschaften verwendet. Derartige Brandschutzscheiben werden aus wenigstens zwei voneinander beabstandeten Glasscheiben gebildet, zwischen denen sich ein Zwischenraum ergibt, welcher mit dem Brandschutzmedium gefüllt ist. Derartige Brandschutzscheiben sind aus dem Stand der Technik bekannt.

Für Brandschutzscheiben, deren Glasscheiben mehr als 3 mm voneinander beabstandet sind, wird in der Regel ausschließlich Einscheiben-Sicherheitsglas für die Glasscheiben verwendet, insbesondere da das Befüllen des zwischen den Glasscheiben gebildeten Zwischenraumes mit einem Brandschutzmedium in der Regel mit senkrecht bzw. vertikal stehenden, parallel zueinander angeordneten Glasscheiben erfolgt und somit durch das einzufüllende Brandschutzmedium ein hoher hydrostatischer Druck auf den unteren Bereich der Glasscheiben einwirkt. Nachteilig an Einscheiben-Sicherheitsglas ist jedoch, dass dies einen aufwendigen Herstellungsprozess bedingt, welcher zudem energieintensiv ist und sich somit als kostenintensiv und umweltbelastend herausgestellt hat.

Ferner ist bei Einscheiben-Sicherheitsglas insbesondere aufgrund der im Kern der Glasscheiben wirkenden Zugspannung und der auf der Oberfläche der Glasscheiben wirkenden Druckspannung eine Nachbearbeitung, insbesondere ein Schneiden oder Schleifen, nicht möglich, da dies zum Bruch der Scheibe führen würde. Aus diesem Grund besteht eine höchst eingeschränkte Flexibilität in der Verwendung von Einscheiben-Sicherheitsglas, insbesondere für Brandschutzscheiben, da aufgrund der nicht möglichen Nachbearbeitung stets Maßanfertigungen produziert werden müssen, welche wiederum kostenintensiv sind.

Glas hingegen, welches hinsichtlich des Bruchverhaltens keine spezifischen Sicherheitseigenschaften aufweist, insbesondere Floatglas, ist kostengünstiger, weniger energieintensiv und somit umweltschonender herstellbar. Es wird in der Praxis im Rahmen der Fertigung für Brandschutzscheiben mit einer Schicht eines Brandschutzmediums größer als 3 mm jedoch nicht in Betracht gezogen, da es beim standardgemäßen Befüllen eines aus diesen Glasscheiben bestehenden Verbundes zumindest beschädigt bzw. zerstört wird.

US 4 268 581 A offenbart ein Verfahren zur Herstellung einer Brandschutzscheibe. DE 195 43 148 A1, DE 10 2005 018842 A1 und DE 41 02 696 A1 offenbaren Brandschutzscheiben für eine Brandschutzverglasung.

Vor diesem Hintergrund liegt der vorliegenden Erfindung die Aufgabe zugrunde ein Verfahren zur Herstellung einer Brandschutzscheibe bereitzustellen, welches insbesondere eine Verwendung von kostengünstig zu fertigenden Glasscheiben ermöglicht und ausreichende Brandschutzeigenschaften seitens der erfindungsgemäß hergestellten Brandschutzscheibe aufweist.

Zur technischen Lösung wird mit der vorliegenden Erfindung ein Verfahren zur Herstellung einer Brandschutzscheibe, insbesondere für eine Brandschutzverglasung zur Vermeidung des Durchtritts von Feuer und/oder Rauch im Brandfall von einem Raum in einen anderen Raum, mit wenigstens zwei voneinander beabstandeten und einen Zwischenraum definierenden Glasscheiben, wobei der Zwischenraum mit einem Brandschutzmedium gefüllt ist, mit den Merkmalen des Anspruchs 1 vorgeschlagen.

Die Erfindung macht dabei insbesondere von der Erkenntnis Gebrauch, dass im Rahmen der Fertigung bzw. Herstellung einer erfindungsgemäßen Brandschutzscheibe bei einer in Bezug auf den Erdboden horizontalen Platzierung ein Befüllen des zwischen den Glasscheiben gebildeten Zwischenraumes mit einem Brandschutzmedium möglich ist, selbst wenn statt Einscheiben-Sicherheitsglas ein einfacher, umweltschonender und kostengünstiger zu fertigendes sowie besser nachzubearbeitendes Glas, welches hinsichtlich seines Bruchverhaltens keine spezifischen Sicherheitseigenschaften aufweist, insbesondere Floatglas, verwendet wird. Durch das erfindungsgemäße Vermeiden einer vertikalen bzw. senkrecht stehenden Befüllung mit einem Brandschutzmedium im Fertigungsprozess wird das Aufkommen eines ansonsten überhöhten hydrostatischen Drucks im unteren Bereich der Glasscheiben umgangen, welcher ein Zerbersten der Glasscheiben bedingt.

In einer vorteilhaften Ausgestaltung der Erfindung ist vorgesehen, dass der zwischen den Glasscheiben definierte Abstand in einem Bereich von größer 3 mm bis etwa 15 mm ist, da so die Verwendung einer breiteren Schicht eines Brandschutzmediums möglich ist. So ist durch den Abstand eine Anpassung der Brandschutzeigenschaften möglich, insbesondere hinsichtlich des zu erzielenden Feuerwiderstands nach DIN 4102 bzw. DIN 13501 oder dergleichen.

In einer weiteren vorteilhaften Ausgestaltung ist vorgesehen, dass die Glasscheiben mittels eines Abstandshalteprofilelements voneinander beabstandet sind. Auf diese Weise kann
ein zu sämtlichen Seiten abgeschlossener Innenraum erzeugt werden, welcher ein einfacheres Befüllen mit einem Brandschutzmedium ermöglicht.

Eine vorteilhafte Ausgestaltung der Erfindung sieht weiter vor, dass der durch die Glasscheiben gebildete Zwischenraum als Brandschutzmedium Wasserglas enthält. Bei der Verwendung von Wasserglas wird bei hohen Temperaturen das Wasser unter Schaumbildung aus dem Wasserglas freigesetzt. Im Brandfall springt somit die brandseitige Scheibe und das aufgeschäumte Wasserglas schützt den Rest der Scheibe.

Alternativ zu der Verwendung von Wasserglas wird gemäß einer weiteren vorteilhaften Ausgestaltung der Erfindung in dem durch die Glasscheiben gebildeten Zwischenraum ein aus einem gelförmigen Medium bestehendes Brandschutzmedium verwendet. Die Verwendung eines gelförmigen Mediums erleichtert besonders den Herstellungsprozess, da es verhältnismäßig einfach in den zwischen den Glasscheiben angeordneten Zwischenraum gefüllt werden kann.

Gemäß einer besonders vorteilhaften Ausgestaltung der Erfindung wird ein zwischen den Glasscheiben im Zwischenraum angeordnetes gelförmiges Medium als Brandschutzmedium genutzt, welches ein Hydrogel mit elektrolytischen Eigenschaften enthält. Die Nutzung von Hydrogel eignet sich besonders, da es anfangs im Wesentlichen transparent ist, im Brandfall jedoch für Strahlung undurchlässig ist und den Durchtritt von Rauch und Flammen sowie die Übertragung von Brandhitze verhindert.

Eine weitere vorteilhafte Ausgestaltung der Erfindung sieht vor, dass ein Abstandshalteprofilelement aus einem hitzebeständigen und im Hinblick auf das Brandschutzmedium aus einem chemisch neutralen und chemisch beständigen Werkstoff verwendet wird. Durch die Verwendung eines solchen Werkstoffes wird zum einen das Zusammenhalten des aus den Glasscheiben und dem Abstandshalteprofilelement bestehenden Verbundes sowie ein im Hinblick auf optische Aspekte ansprechendes Erscheinungsbild der Brandschutzscheibe gewährleistet. Ferner verhindert die
Wahl eines chemisch beständigen Werkstoffs für das Abstandshalteprofilelement Reaktionen mit einem als Haftmittel zum Befestigen des Abstandshalteprofilelements verwendeten Werkstoffes und/oder dem Brandschutzmedium selbst, welche optische Beeinträchtigungen an der Brandschutzscheibe hervorrufen könnten.

Vorteilhafterweise ist das Abstandshalteprofilelement, welches die Glasscheiben voneinander beabstandet, nach Art eines umlaufenden Rahmens ausgebildet. Dies ermöglicht eine einfache Fertigung bzw. Herstellung des Abstandshalteprofilelements als auch einen im Vergleich zu einer mehrteiligen Ausführung geringeren Montageaufwand.

In einer vorteilhaften Ausgestaltung der Erfindung weist das Abstandshalteprofilelement einen im Wesentlichen C-, L-, U- oder I-förmigen Querschnitt auf. Somit kann in Abhängigkeit von der gewünschten Beabstandung ein für das zu verwendende Brandschutzmedium adäquater Rahmen genutzt werden.

In einer weiteren besonders vorteilhaften Ausgestaltung der Erfindung weist das Abstandshalteprofilelement mindestens eine verschließbare Öffnung, insbesondere zum Einbringen eines Brandschutzmediums, zwischen den voneinander beabstandeten Glasscheiben auf. Auf diese Weise kann ein besonders einfaches Einfüllen eines Brandschutzmediums, beispielsweise mittels einer spritzenartigen Vorrichtung, erzielt werden.

Eine bevorzugte Ausgestaltung des erfindungsgemäßen Verfahrens sieht dabei vor, dass das Füllen des zwischen den Glasscheiben gebildeten Zwischenraumes mit einem Brandschutzmedium mittels einer vorzugsweise verschließbaren Öffnung erfolgt. Die Öffnung ist vorteilhafterweise in dem Abstandshalteprofilelement vorgesehen. Dies ist insbesondere bei der Verwendung eines im Wesentlichen flüssigen Brandschutzmediums vorteilhaft, da so ein Austritt des Brandschutzmediums aus dem zwischen den Glasscheiben und dem Abstandshalteprofilelement gebildeten Zwischenraum unterbunden werden kann.

Gemäß einer weiteren vorteilhaften Ausgestaltung des erfindungsgemäßen Verfahrens erfolgt das Aushärten des Brandschutzmediums mittels einer Wärmequelle oder eines chemischen Prozesses in horizontaler bzw. waagerechter Position, da auf diese Weise der auf die erste bzw. untere Glasscheibe durch das Brandschutzmedium wirkende Druck auf diese gleichmäßig verteilt wird und im Gegensatz zu einer vertikalen Anordnung des Verbundes kein überhöhter hydrostatischer Druck auf den unteren Bereich der Glasscheiben erzeugt wird.

Eine weitere vorteilhafte Ausgestaltung des erfindungsgemäßen Verfahrens sieht vor, dass das Aushärten des Brandschutzmediums mittels einer Wärmequelle oder eines chemischen Prozesses in vertikaler bzw. senkrechter Position erfolgt. Es wurde überraschend festgestellt, dass aufgrund des mit einem Brandschutzmedium gefüllten Verbundes aus Glasscheiben und Brandschutzmedium Adhäsionskräfte wirken, welche den Druck auf den unteren Bereich der vertikal bzw. senkrecht angeordneten Glasscheiben, bei welchen die Oberflächen orthogonal zum Erdboden angeordnet sind, minimieren. Somit ist eine Nutzung von bereits bestehenden Fertigungsanlagen, bei denen die Aufnahme von vertikal bzw. senkrecht aufgestellten Glasscheiben oder einem aus Glasscheiben bestehenden Verbund vorgesehen ist, möglich.

Offenbart wird ferner eine Brandschutzverglasung, welche aus wenigstens zwei nebeneinander oder übereinander angeordneten, erfindungsgemäß hergestellten Brandschutzscheiben besteht. Mit einer solchen Brandschutzverglasung lässt sich besonders im Architekturbereich die Anzahl der Gestaltungsmöglichkeiten unter der Berücksichtigung von Brandschutzanforderungen vergrößern.

Weitere Einzelheiten, Merkmale und Vorteile der Erfindung werden nachfolgend anhand der in den Figuren der Zeichnungen dargestellten Ausführungsbeispiele näher erläutert.

Dabei zeigen:
- Fig. 1: in schematischer Schnittansicht ein Ausführungsbeispiel einer erfindungsgemäß hergestellten Brandschutzscheibe;
- Fig. 2: in schematischer Draufsicht ein weiteres Ausführungsbeispiel der erfindungsgemäß hergestellten Brandschutzscheibe nach Fig. 1;
- Fig. 3a: in schematischer Schnittansicht ein Ausführungsbeispiel einer erfindungsgemäßen Fertigung einer Brandschutzscheibe nach einem ersten Verfahrensschritt;
- Fig. 3b: in schematischer Schnittansicht ein Ausführungsbeispiel einer erfindungsgemäßen Fertigung einer Brandschutzscheibe nach einem zweiten Verfahrensschritt;
- Fig. 3c: in schematischer Schnittansicht ein Ausführungsbeispiel einer erfindungsgemäßen Fertigung einer Brandschutzscheibe nach einem dritten und vierten Verfahrensschritt;
- Fig. 3d: in schematischer Schnittansicht ein Ausführungsbeispiel einer erfindungsgemäßen Fertigung einer Brandschutzscheibe nach Durchführung eines fünften und sechsten Verfahrensschritts; und
- Fig. 4: eine schematische Ansicht eines Ausführungsbeispiels einer Brandschutzverglasung aus erfindungsgemäß hergestellten Brandschutzscheiben.

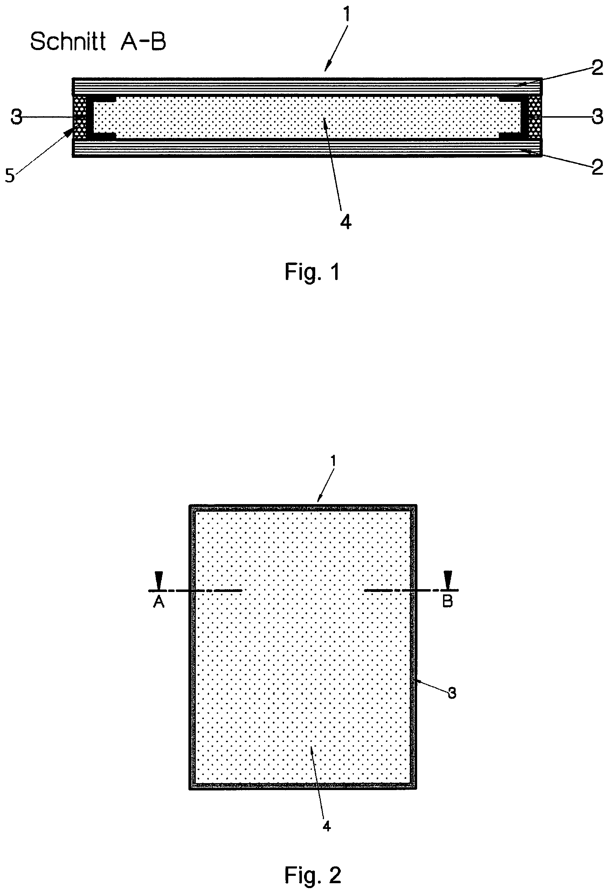

Fig. 1 zeigt in einer schematischen Schnittansicht eine Brandschutzscheibe 1. Die Brandschutzscheibe 1 besteht aus einem Verbund von zwei in diesem Ausführungsbeispiel durch ein Abstandshalteprofilelement 3 voneinander beabstandeten Glasscheiben 2. Zwischen den Glasscheiben 2 und dem Abstandshalteprofilelement 3 ist ein Brandschutzmedium 4 in dem von den Glasscheiben 2 und dem Abstandshalteprofilelement 3 gebildeten Zwischenraum angeordnet, wobei der durch das Abstandhalteprofilelement 3 definierte Abstand zwischen den Glasscheiben 2 größer als 3 mm ist. Zur weiteren Abdichtung ist ferner eine Diffusionssperre 5, insbesondere eine Wasserdampfdiffusionssperre aus einem wasserdampfundurchlässigen Butylkautschuk oder einer Metallfolie und einer Schicht aus Polyisobutyl, vorgesehen. Die Glasscheiben 2 in Fig. 1 sind aus einem Glas, welches hinsichtlich seines Bruchverhaltens keine spezifischen Sicherheitseigenschaften aufweist. Das Abstandshalteprofilelement 3 ist in diesem Ausführungsbeispiel als ein umlaufender Rahmen mit einem im Wesentlichen U-förmigen Querschnitt ausgebildet.

Fig. 2 zeigt in einer schematischen Draufsicht die Brandschutzscheibe 1 nach Fig. 1. Die Brandschutzscheibe 1 besteht aus einem Verbund von zwei Glasscheiben 2 und einem Abstandshalteprofilelement 3, welches nach Art eines umlaufenden Rahmens ausgebildet ist und die Glasscheiben mehr als 3 mm voneinander beabstandet. Die Glasscheiben 2 definieren zusammen mit dem Abstandshalteprofilelement 3 einen Zwischenraum, wobei der Zwischenraum mit einem Brandschutzmedium 4 gefüllt ist. In Fig. 2 wird deutlich ersichtlich, dass das Abstandshalteprofilelement 3 als umlaufender Rahmen ausgebildet ist, welcher im gesamten Außenbereich der Brandschutzscheibe angeordnet ist.

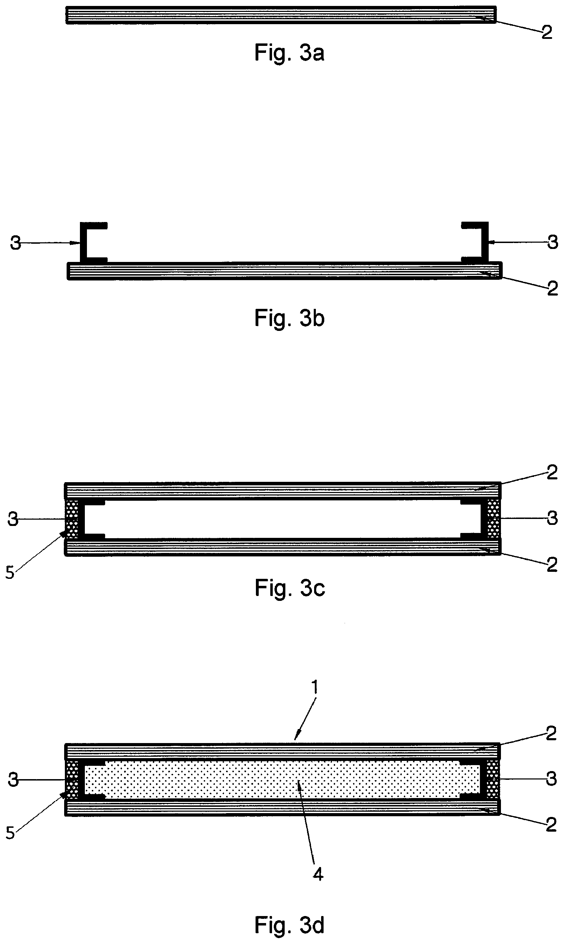

Fig. 3a (erster Verfahrensschritt) zeigt in einer schematischen Schnittansicht eine erste Glasscheibe 2. Die Glasscheibe 2 besteht aus einem hinsichtlich seines Bruchverhaltens keine spezifischen Sicherheitseigenschaften aufweisenden Glas.

Fig. 3b zeigt in einer schematischen Schnittansicht ein auf bzw. an der ersten Glasscheibe 2 (vgl. Fig. 3a) aufgebrachtes Abstandshalteprofilelement 3 nach dem zweiten Verfahrensschritt zur Herstellung einer Brandschutzscheibe. Das Abstandshalteprofilelement 3 ist dabei beispielsweise mit einem Haftmittel auf der ersten Glasscheibe 2 befestigt und beabstandet die Glasscheiben mehr als 3 mm voneinander. Die alternative Verwendung eines temporär nutzbaren Abstandshalters anstatt eines Abstandshalteprofilelements 3 ist ebenfalls möglich (hier nicht dargestellt).

Fig. 3c (dritter und vierter Verfahrensschritt) zeigt in einer schematischen Schnittansicht eine auf bzw. an die erste Glasscheibe 2 und das daran befestigte Abstandshalteprofilelement 3 aufgebrachte zweite Glasscheibe 2, welche ebenfalls beispielsweise mittels Haftmittel, insbesondere Butylkautschuk oder dergleichen, mit dem Abstandshalteprofilelement 3 verbunden wird und durch das Abstandshalteprofilelement 3 von der ersten Glasscheibe 2 beabstandet ist. Durch die Anordnung der zweiten Glasscheibe 2 auf dem an der ersten Glasscheibe 2 angebrachten Abstandsprofilhalteelement 3 wird somit der mit dem Brandschutzmedium 4 zu füllende Zwischenraum definiert. Gemäß einem vierten Verfahrensschritt ist eine Diffusionssperre 5 auf bzw. an dem aus den Glasscheiben 2 und dem Abstandshalteprofilelement 3 bestehenden Verbund befestigt.

Fig. 3d zeigt in einer schematischen Schnittansicht eine Brandschutzscheibe 1 nach den Verfahrensschritten fünf und sechs des Verfahrens zur Herstellung bzw. Fertigung der Brandschutzscheibe 1. Dabei erfolgt im fünften Verfahrensschritt das Anordnen in eine horizontale bzw. waagerechte Position und im sechsten Verfahrensschritt das Füllen des zwischen dem Abstandhalteprofilelement 3 und den Glasscheiben 2 gebildeten Zwischenraumes mit einem Brandschutzmedium 4. Das Füllen mit einem Brandschutzmedium 4 kann beispielsweise durch eine verschließbare Öffnung erfolgen, welche in Fig. 3d nicht explizit dargestellt ist. Der Vorgang des Befüllens des durch das Abstandshalteprofilelement 3 und die Glasscheiben 2 definierten Verbundes erfolgt dabei entgegen dem Stand der Technik in horizontaler Position bzw. Platzierung, um eine Reduzierung des auf die untere Glasscheibe 2 wirkenden hydrostatischen Drucks zu erzielen, welche durch Verringerung der Höhe der aus dem Brandschutzmedium 4 bestehenden Flüssigkeitssäule resultiert.

In einem weiteren Verfahrensschritt zur Herstellung einer Brandschutzscheibe 1, erfolgt für den aus den Glasscheiben 2 und dem Abstandshalteprofilelement 3 bestehenden, mit einem Brandschutzmedium 4 gefüllten Verbund ein Aushärten mittels einer Vorrichtung zum Aushärten durch eine Wärmequelle oder durch einen chemischen Prozess. Das Aushärten des Verbundes erfolgt dabei insbesondere in horizontaler bzw. waagerechter Position. Aufgrund der durch die Füllung mit dem Brandschutzmedium 4 wirkenden und den hydrostatischen Druck reduzierenden Adhäsionskräfte ist alternativ ein Aushärten des Verbundes in senkrechter bzw. vertikaler Position möglich.

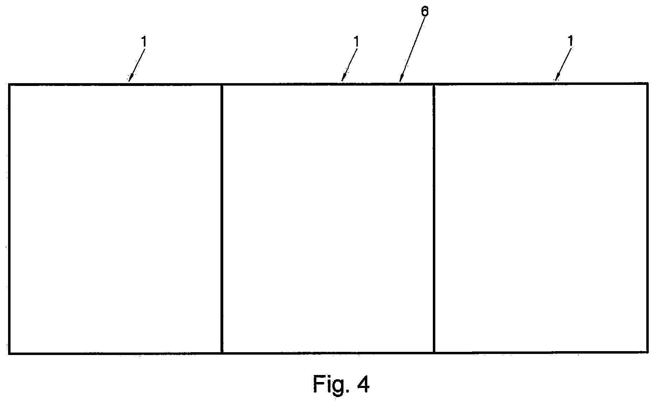

Fig. 4 zeigt eine schematische Ansicht einer Brandschutzverglasung 6, bestehend aus drei nebeneinander angeordneten Brandschutzscheiben 1. Die verwendeten Brandschutzscheiben 1 stellen dabei jeweils eine erfindungsgemäß hergestellte Brandschutzscheibe dar, welche aus wenigstens zwei ggfs. durch ein Abstandshalteprofilelement voneinander beabstandeten und zusammen mit diesem einen Zwischenraum definierenden Glasscheiben besteht, wobei die Glasscheiben aus einem keine spezifischen Sicherheitseigenschaften aufweisenden Glas sind und der zwischen den Glasscheiben definierte Abstand größer als 3 mm ist.

Die in den Figuren der Zeichnung dargestellten Ausführungsbeispiele und die im Zusammenhang mit diesen erläuterten Ausführungsbeispiele dienen lediglich einer Erläuterung der Erfindung und sind für diese nicht beschränkend.

### Bezugszeichenliste:

- 1: Brandschutzscheibe
- 2: Glasscheibe
- 3: Abstandshalteprofilelement
- 4: Brandschutzmedium
- 5: Diffusionssperre
- 6: Brandschutzverglasung

## Patentansprüche

1. Verfahren zur Herstellung einer Brandschutzscheibe (1) umfassend die Verfahrensschritte:
- Platzierung einer ersten Glasscheibe (2),
- Platzierung eines Mittels, insbesondere eines Abstandshalteprofilelements (3), zur Beabstandung der Glasscheiben (2) voneinander an der ersten Glasscheibe (2),
- Platzierung einer zweiten Glasscheibe (2), wobei die Oberfläche dieser Glasscheibe (2) parallel zur Oberfläche der ersten Glasscheibe (2) angeordnet ist, an dem an der ersten Glasscheibe (2) platzierten Mittel zur Beabstandung der Glasscheiben (2) voneinander,
- Verbringen des aus den Glasscheiben (2) und dem Mittel zur Beabstandung der Glasscheiben (2) gebildeten Verbundes in eine horizontale Position mit parallel zum Erdboden angeordneten Oberflächen der Glasscheiben (2),
- Füllen des zwischen den Glasscheiben (2) gebildeten Zwischenraumes mit einem Brandschutzmedium (4) in der horizontalen Position zur Reduzierung des auf die erste, untere Glasscheibe (2) wirkenden hydrostatischen Drucks, und
- Aushärten des in den zwischen den Glasscheiben (2) und dem Mittel zur Beabstandung der Glasscheiben (2) gebildeten Zwischenraum eingebrachten Brandschutzmediums (4), wobei die verwendeten Glasscheiben (2) aus einem hinsichtlich des Bruchverhaltens keine spezifischen Sicherheitseigenschaften aufweisenden Glas, vorzugsweise Floatglas, sind und der zwischen den Glasscheiben definierte Abstand größer als 3 mm ist.

2. Verfahren nach Anspruch 1, **dadurch gekennzeichnet, dass** das Füllen des zwischen den Glasscheiben (2) gebildeten Zwischenraumes mit einem Brandschutzmedium (4) mittels einer vorzugsweise verschließbaren Öffnung erfolgt.

3. Verfahren nach einem der Ansprüche 1 oder 2, **dadurch gekennzeichnet, dass** das Aushärten des Brandschutzmediums (4) mittels einer Wärmequelle oder eines chemischen Prozesses in horizontaler bzw. waagerechter Position erfolgt.

4. Verfahren nach einem der Ansprüche 1 oder 2, **dadurch gekennzeichnet, dass** das Aushärten des Brandschutzmediums (4) mittels einer Wärmequelle oder eines chemischen Prozesses in vertikaler bzw. senkrechter Position erfolgt.

## Claims

1. Method for producing a fireproof pane (1) comprising the following method steps:
- placing a first glass pane (2),
- placing a means, in particular a spacer profile element (3), for spacing the glass panes (2) apart from one another on the first glass pane (2),
- placing a second glass pane (2), wherein the surface of this glass pane (2) is arranged parallel to the surface of the first glass pane (2), on the means for spacing the glass panes (2) apart from one another that is placed on the first glass pane (2),
- bringing the assembly formed from the glass panes (2) and the means for spacing the glass panes (2) apart into a horizontal position with the surfaces of the glass panes (2) arranged parallel to the ground,
- filling the interspace formed between the glass panes (2) with a fireproof medium (4) in the horizontal position for reducing the hydrostatic pressure acting on the first, lower glass pane (2), and
- curing the fireproof medium (4) introduced into the interspace formed between the glass panes (2) and the means for spacing the glass panes (2) apart,
wherein the glass panes (2) used are made of a glass, preferably float glass, which has no specific safety properties in terms of breakage behaviour, and the spacing defined between the glass panes is greater than 3 mm.

2. Method according to Claim 1, **characterized in that** the filling of the interspace formed between the glass panes (2) with a fireproof medium (4) occurs by means of a preferably closable opening.

3. Method according to either of Claims 1 and 2, **characterized in that** the curing of the fireproof medium (4) occurs in the horizontal position by means of a heat source or a chemical process.

4. Method according to either of Claims 1 and 2, **characterized in that** the curing of the fireproof medium (4) occurs in the vertical position by means of a heat source or a chemical process.

## Revendications

1. Procédé de fabrication d'une vitre pare-feu (1), comprenant les étapes de procédé suivantes :
- positionnement d'une première vitre en verre (2) ,
- positionnement d'un moyen, en particulier d'un élément profilé d'espacement (3) pour espacer les unes des autres les vitres en verre (2) au niveau de la première vitre en verre (2),
- positionnement d'une deuxième vitre en verre (2), la surface de cette vitre en verre (2) étant parallèle à la surface de la première vitre en verre (2), sur le moyen placé sur la première vitre en verre (2) pour espacer les vitres en verre (2) les unes des autres,
- orientation de l'assemblage formé des vitres en verre (2) du moyen pour espacer les vitres en verre (2) dans une position horizontale avec les surfaces des vitres en verre (2) disposées parallèlement au sol,
- remplissage de l'espace intermédiaire formé entre les vitres en verre (2) avec un milieu pare-feu (4) dans la position horizontale pour réduire la pression hydrostatique agissant sur la première vitre en verre inférieure (2), et
- durcissement du milieu pare-feu (4) introduit dans l'espace intermédiaire formé entre les vitres en verre (2) et le moyen pour espacer les vitres en verre (2),
les vitres en verre utilisées (2) étant fabriquées en un verre, de préférence un verre flotté, ne présentant pas de propriétés de sécurité spécifiques en termes de comportement à la rupture, et l'espace défini entre les vitres en verre étant supérieur à 3 mm.

2. Procédé selon la revendication 1, **caractérisé en ce que** le remplissage de l'espace intermédiaire formé entre les vitres en verre (2) avec un milieu pare-feu (4) est effectué au moyen d'une ouverture de préférence refermable.

3. Procédé selon l'une quelconque des revendications 1 ou 2, **caractérisé en ce que** le durcissement du milieu pare-feu (4) s'effectue au moyen d'une source de chaleur ou d'un processus chimique dans une position horizontale ou couchée.

4. Procédé selon l'une quelconque des revendications 1 ou 2, **caractérisé en ce que** le durcissement du milieu pare-feu (4) s'effectue au moyen d'une source de chaleur ou d'un processus chimique dans une position verticale ou dressée.
